# EUROPEAN PATENT APPLICATION

(11) **EP 3 564 859 A1**
(43) Date of publication of application: **06.11.2019**
(21) Application number: 19171825.3
(22) Date of filing: 30.04.2019
(51) Int. Cl.: G06K 19/07, G09F 27/00, G06Q 30/02, G06F 3/147

(54) **INTELLIGENT ENERGY MANAGEMENT SYSTEMS**

(30) Priority: 03.05.2018 GB 201807313
(71) Applicant: Displaydata Limited, Malvern Worcestershire WR14 3SZ (GB)
(72) Inventor: DIX, David, Malvern, Worcestershire WR14 3SZ (GB)
(74) Representative: Black, Diego

(57) **Abstract**

A remote display module configured to intelligently manage energy when processing display update requests. The remote display module comprising: a display; a communication means configured to send and receive data; an energy module configured to supply energy to the device; and a processing means communicably linked to the display, the communication means, and the energy module; wherein the processing means is configured to receive a display update request comprising an instruction; determine an available energy amount from the energy module and a required energy amount based on the energy required to execute the instruction; and send a display update response when the available energy does not exceed a threshold based on the required energy amount.

## Description

### TECHNICAL FIELD

The present invention relates to a method and system for intelligently managing the energy of a remote display module, such as an electronic shelf edge label. Specifically, the method and system enable the remote display module to handle display update requests in an intelligent manner, and further send a response indicative of the action taken as a result of the display update request.

### BACKGROUND

In known electronic shelf edge label (ESL) systems, retailers are enabled to have an electronic display associated with products within their store. Such systems allow retailers to change the content of the display from a centrally managed location. Normally these displays carry product content and price information, much akin to existing paper labels.

In a typical ESL system, each display in a retail environment utilises multiple lithium manganese primary coin cell batteries. A retailer can have several thousand ESLs, with known systems having upwards of 60,000 displays in each store with some retailers having over 2,000 stores. This can result in more than 250 million batteries across their estate. Any retailer deploying an ESL solution across an entire estate of this size must plan for the management and disposal of these batteries over the lifetime of the battery, which is typically 5-7 years.

In order to extend the lifetime of the display, ESLs typically function in a low energy manner, with the communication between each ESL and a central processor being managed so as to reduce the energy requirement of the ESL. An example of such energy management is described in WO2010004349 where individual ESLs periodically exit a sleep mode in order to check for, and receive, instructions from the central server. Such instructions may include update instructions in which the display of the ESL is updated. It is also known that the receipt and execution of update data can be particularly energy intensive.

It is also known for ESLs to have rechargeable energy sources to extend the lifetime of an ESL. Existing solutions based on energy harvesting to provide a re-chargeable battery source face a number of challenges. In particular the management of the ESL, and its ability to perform certain tasks based on the amount of available energy must be taken into account.

According to one aspect of the invention, there is provided a remote display module, comprising: a display; a communication means, configured to transmit and receive data; an energy module, configured to acquire energy from the environment, supply energy to the device, and store excess energy; and a processing means, communicably linked to the display, the communication means, and the energy module; wherein the processing means is configured to: receive a display update request comprising an instruction; determine an available energy amount from the energy module; determine a required energy amount based on the energy required to execute the instruction of the display update request; and send a display update response when the available energy amount does not exceed a threshold based on the required energy amount.

According to another aspect of the invention, there is provided a method for controlling a remote display module, comprising the steps of: receiving a display update request comprising an instruction; determining an available energy amount from an energy module of the remote display module; determining a required energy amount for executing the instruction of the display update request; sending a display update response when the available energy amount does not exceed a threshold based on the required energy amount.

According to a further aspect of the invention, there is provided a system for managing updates within a limited energy supply environment, comprising: a first central server; and a first remote display module; wherein the system is configured to: send a first display update request comprising an instruction from the first central server to the first remote display module; receive the first display update request at the first remote display module; determine at the first remote display module an available energy amount and a required energy amount for executing the instruction of the first display update request; send from the first remote display module to the first central server a first display update response when the available energy amount does not exceed a threshold based on the required energy amount.

Such aspects allow a module to intelligently manage display updates based on the energy available and the energy required to perform a display update request. Therefore, updates are only performed when there is sufficient energy available and as such, the module makes more efficient use of energy and will not waste energy attempting to perform an update when there is insufficient energy available to perform the update. This leads to reduction in energy costs and more sustainable energy usage. Furthermore, the module is configured to send a display update response indicative of its ability to perform the display update. Beneficially, this allows a more efficient and effective management of remote display modules since update requests may be scheduled for a point in time when it is known that a remote display module is likely to have energy available. This makes more efficient use of energy and network usage since updates requests will be sent at a point in time when they are likely to be fully performed. In consequence, such aspects help to reduce the cost of running a site comprising multiple remote display modules since there is provided a remote display module which intelligently manages energy and is able to harvest energy from the environment, thereby reducing reliance on non-rechargeable energy sources.

Optionally but preferably, there is provided a remote display module wherein the processing means is further configured to decline from executing the instruction of the display update request when the available energy amount does not exceed a threshold based on the required energy amount. Beneficially, the remote display module will therefore continue to operate according to user expectations. The scenario whereby the module runs out of energy during the update process is avoided since the instruction of the display update request is only executed when there is sufficient energy available. Additionally, this helps to reduce the downtime of a remote display module as a result of insufficient energy being available to the remote display module to perform basic functionalities thereby ensuring that the remote display module functions according to user expectation.

Optionally but preferably, there is provided a remote display module wherein the instruction of the display update request comprises a download instruction and wherein the display update response comprises an estimated time to retry value. This allows for the remote display module to provide a hint as to when a future display update request may be sent. This therefore allows for a more efficient and effective scheduling of display update requests since update requests are sent at times when a remote display module is more likely to be able to execute the instruction of the display update request.

Optionally but preferably, there is provided a remote display module wherein the instruction of the display update request comprises an update instruction and wherein the display update response comprises an estimated time to update value. This allows for the remote display module to provide a hint as to when the download instruction of the display update request will be successfully executed. In consequence, this allows the user of the remote display update module to know at what point in time a display update request is likely to have been successfully executed without having to send further queries or physically check the remote display module, thereby leading to savings in energy and network resources.

Optionally but preferably, there is provided a remote display module wherein the instruction of the display update request comprises a current state query instruction, and wherein the display update response comprises a current state value indicative of the state of the remote display module within the update process, and wherein the current state value comprises one of idle, download complete, insufficient energy for download, charging, and update complete. Beneficially, this allows for the state of the remote display module to be ascertained at any point in the update process. In consequence, this allows for the user to gain insight into the state of a remote display module without having to physically check the remote display module, thereby leading to savings in time and resources. Furthermore, the state value may aid a system for managing display update requests to improve the sending and scheduling of display update request as the system may use the state value of a remote display module to decide upon a course of action.

Optionally but preferably, there is provided a remote display module wherein the processing means is further configured to execute the instruction of the display update request when the available energy amount exceeds a threshold based on the required energy amount, and wherein the processing means is further configured to send a display update response after the instruction of the display update request has been executed. This allows for the remote display update to confirm the execution of the instruction of a display update response. In consequence, this allows for efficient management of a remote display update module since a display update request may be known to be complete upon receipt of the display update response indicative of completion.

Optionally but preferably, there is provided a remote display module wherein the display update response comprises the available energy amount of the remote display module. Beneficially, this allows a first central server configured to manage a remote display module to ascertain the amount of energy available to the remote display module and in consequence manage future display updates in a more efficient manner. Furthermore, in a further embodiment, the first central server may be configured to provide energy to the remote display module in accordance with the amount of energy available to the remote display module in order to increase the likelihood of a display update request being performed.

Optionally but preferably, there is provided a remote display module wherein the threshold is equal to the required energy amount.

Optionally but preferably, there is provided a remote display module wherein the display means comprises an ultra-low energy device such as an Electrophoretic Display or bistable LCD display. This allows for the remote display module to make efficient use of the energy available since the display module will continue to display information without requiring excessive energy from the energy module.

Optionally but preferably, there is provided a remote display module wherein the energy module comprises an energy harvester, such as a solar panel, RF energy harvester, or an inductive coil; and wherein the energy module comprises an energy storage means, such as a capacitor storage, super capacitor storage, or rechargeable battery source. Such a remote display module reduces the need for a replaceable energy supply such as non-rechargeable battery cells. A retailer can have several thousand ESLs, with known systems having upwards of 60,000 displays in each store with some retailers having over 2,000 stores. This can result in more than 250 million batteries across their estate. Any retailer deploying an ESL solution across an entire estate of this size must plan for the management and disposal of these batteries over the lifetime of the battery, which is typically 5-7 years. Such an energy harvester avoids the need for batteries to replaced and disposed of thereby leading to reduction in environmental waste and reduction in cost to the user.

Optionally but preferably, there is provided a system for managing updates within a limited energy supply environment wherein the system is configured to assign a first priority value to the first remote display module wherein the first priority value is based on the display update response, and wherein the first priority value is based on the available energy amount of the first remote display module, and wherein the system further comprises: a second remote display module having a second priority value; wherein the system is further configured to: order the schedule of sending a third display update request to the first remote display module and sending a fourth display update request to the second display module such that: the first remote display module will be scheduled to receive the third display update request at a point in time before the second remote display module is scheduled to receive a fourth display update request when the first priority value of the first remote display module is greater than the second priority value of the second remote display module. Such a system therefore allows for remote display modules with less available energy to be given time to obtain energy before sending a display update request. Beneficially, this provides for a system whereby display update requests are sent in an efficient and effective manner since display update requests are sent first to remote display modules with available energy such that they have a higher likelihood of performing the display update requests when compared with remote display modules with less available energy.

Optionally but preferably, there is provided a system for managing updates within a limited energy supply environment wherein the system is configured to determine at the first central server a probability of success value based in part on the first display update response, wherein the probability of success value may inform a user of the system the probability of achieving a successful update at a future point in time. This provides for a system whereby a user of the system is provided with information as to the likelihood of a future display update request being performed. As such, more information is provided to a user and as such, they are able to make more effective decisions as to the management of remote display modules within the system.

As such the invention provides a means for intelligently managing the updating of the display. In contrast to known systems where updates are performed, regardless of the amount of energy available to the ESL, the invention allows for updates to be performed when there is sufficient energy available and in the event that there is insufficient energy to the device, the system may schedule the update for a time when the ESL is calculated to have sufficient energy.

Further aspects of the invention are apparent from the appended claim set.

### BRIEF DESCRIPTION OF DRAWINGS

Embodiments of the invention will now be described with reference to the accompanying drawings, in which:
Figure 1 shows a remote display module according to an aspect of the invention;
Figure 2 is a schematic representation of the intelligent energy management solution according to an aspect of the invention;
Figure 3 shows a state chart for a remote display module according to an embodiment of the invention;
Figure 4 shows a flowchart of the steps taken by a remote display module when performing intelligent energy management according to an aspect of the invention;
Figure 5 shows a flowchart of a portion of the steps taken by a remote display module as part of the update process according to an aspect of the invention;
Figure 6 is a schematic representation of a remote display module system according to an aspect of the invention;
Figure 7 shows a schematic representation of the scheduling of a future update according to an aspect of the invention;
Figure 8 shows a priority ordering of remote display devices according to an aspect of the invention;
Figures 9 and 10 show a flowchart of a representative example of an embodiment of the invention.

### DETAILED DESCRIPTION

An embodiment of the present invention will now be described with reference to the attached figures. It is to be noted that the following description is merely used for enabling the skilled person to understand the present invention, without any intention to limit the applicability of the present invention to other embodiments which could be readily understood and/or envisaged by the reader. In particular, the present invention is described in relation to an electronic shelf edge label (ESL) for use within a retail environment. However, it will be appreciated that the present invention could be applied in other areas such as room signage, industrial markets, and warehousing.

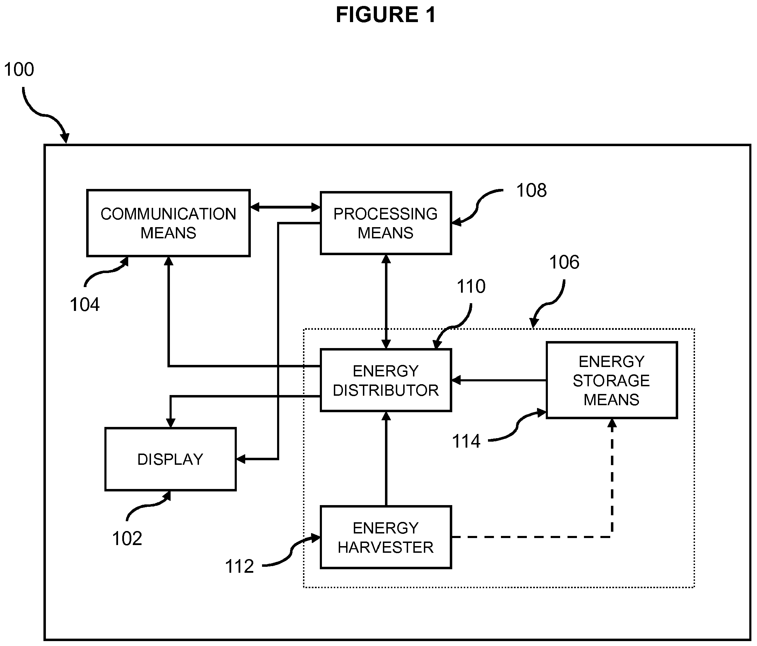

Figure 1 shows a remote display module 100. Preferably, the remote display module 100 is an electronic edge shelf label (ESL). Alternatively, the remote display module may be another remotely updated display means.

The remote display module 100 comprises a display 102, a communication means 104, an energy source 106, and a processing means 108. The energy source 106 includes an energy distributor 110, an energy harvester 112, and an energy storage means 114.

The processing means 108 is connected to the display 102, the communication means 104, and the energy source 106 in order to provide commands, or instructions, to each of these elements. The communication means 104 is further connected to the processing means 108 such that the communication means 104 may provide commands or instructions to the processing means 108.

The processing means 108 in an embodiment in a known commercially available microprocessor. The communication means 104 in an embodiment is an RF transceiver configured to communicate at sub 1-GHz frequencies. In further embodiments the transceiver communicates at known Wi-Fi frequencies and in other ISM-RF bands.

The display 102 is configured to display information on the remote display module 100. Such information may include product information, manufacturer information, pricing information, logos or indicia, and discount information. In a preferred embodiment, the display 102 is an ultra-low energy display such as an Electrophoretic Display or bistable LCD display. Beneficially, such types of display allow information to be displayed over long periods of time with minimal power consumption. That is, once the display 102 has been instructed by the processing means 108 to display an item of information, the display 102 retains the display of this information in a low power state until told to update. In alternative embodiments, other types of display may be used such as LED displays, OLED displays, and Thin-film transistor displays. Such forms of display are known, and commercially available.

The communication means 104 is configured to send and receive data to and from the remote display device 100 to a central server (not shown). The processing means 108 may instruct the communication means 104 to send a packet of data. The communication means 104 may instruct the processing means 108 that a packet of data has been received.

In a preferred embodiment, the communication means 104 is a wireless communication means configured to send and receive data over a wireless network. Preferably, the communication means is configured to send and receive data over a low frequency RF network such as a sub 1GHz network. This allows for both increased security and does not interfere with existing Wi-Fi, Bluetooth and Zigbee networks.

The energy source 106 provides power to at least part of the remote display module 100. In a preferred embodiment, the energy source 106 includes an energy distributor 110. The energy distributor 110 is connected so as to provide power to the display 102, the communication means 104, and the processing means 108. In addition, the processing means 108 may communicate with the energy distributor 110 in order to ascertain the amount of energy that is currently available to the remote display module 100. In an embodiment the amount of energy that is currently available to the remote display module 100 is determined based on known state of charge measurement techniques.

In a preferred embodiment, the energy source 106 further includes an energy harvester 112 connected to supply energy to the energy distributor 110. The energy harvester 112 is enabled to collect energy from the environment of the remote display module 100. In an embodiment the energy harvester 112 is an inductive coil, solar panel, or RF energy harvester. Any energy harvested from the environment by the energy harvester 112 is provided to the energy distributor 110. Any excess energy harvested by the energy harvester 112 may optionally be routed to the energy storage means 114. In a preferred embodiment, the energy storage means comprises a rechargeable element such as energy storage means 114 of the energy source 106. The energy storage means 114 is configured to store excess energy harvested by the energy harvester 112, and provide energy to the energy distributor 110 when required. Beneficially, this enables the remote display module to retain power to the components such as the display 102 and the processing means 108 when the energy harvester 112 is unable to harvest energy from the environment. For example, if the energy harvester is a solar panel, then when no solar energy is available, the energy distributor 110 is able to draw power from the energy storage means 114 as opposed to the energy harvester 112.

Preferably, the energy storage means 114 may be one of a capacitor storage, super capacitor storage, or rechargeable battery source.

The processing means 108 is configured to control the other components of the remote display module 100. The primary function of the processing means 108, as described in detail below, is to make intelligent use of the energy resources available from the energy source 106 and to control when those energy resources are used. Beneficially, this intelligent use of energy by the processing means 108 ensures that the remote display module 100 avoids situations where energy runs out during the update process. As such, the intelligent use of energy by the processing means ensures that the remote display module 100 has an appropriate behaviour expected by its users.

In a preferred embodiment, the processing means 108 is configured to receive a request from the communication means 104 sent from an outside source, such as a central server. Such a request may comprise an instruction to download data for an update, an instruction to perform an update, or an instruction querying the current state of the remote display device 100.

An aspect of the invention is that the processing means 108 is enabled to make intelligent decisions and determine whether or not to process such a request based on the amount of energy available at the energy source 106 to carry out that request. Beneficially, this allows for the processing means 108 to decline from carrying out a request when the processing means 108 identifies that there would be insufficient energy to fully carry out the request. This avoids any problems that may occur due to insufficient energy, such as partial downloads, or partial display updates. Therefore, the intelligent use of energy by the processing means 108 ensures a consistent behaviour by the remote display module 100. Furthermore, the intelligent use of energy by the processing means 108 reduces energy wastage, as no attempts will be made to execute an instruction when there is not sufficient energy to execute the instruction in full. This reduces the overall energy usage of the remote display modules, thereby extending the lifetime of an individual remote display module. Furthermore across a store where several tens of thousands ESLs may be used this may result in substantial energy savings and costs.

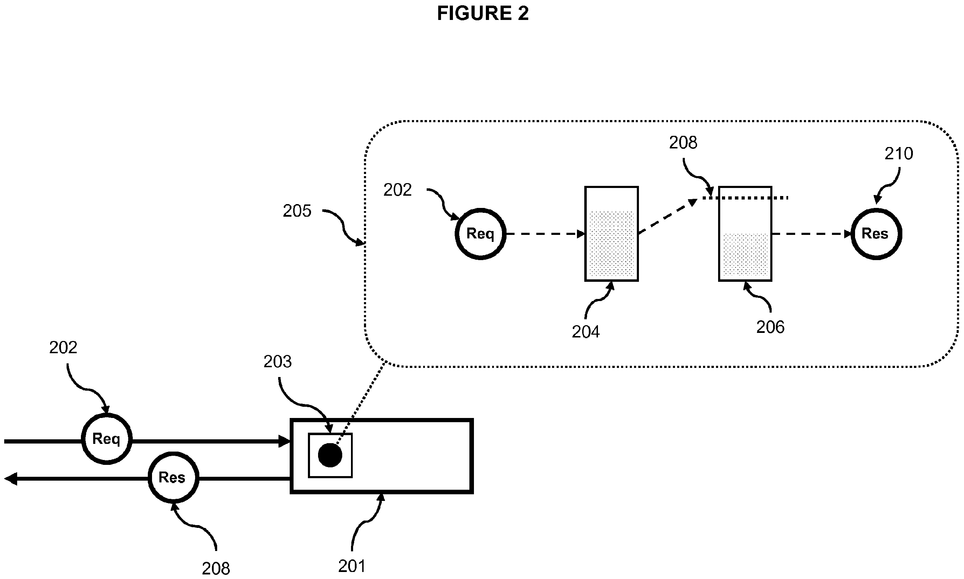

Figure 2 is a schematic representation of the intelligent energy management decisions performed by the processing means 108 according to an aspect of the invention.

Figure 2 shows a remote display module 201, such as the remote display module 100 of Figure 1, receiving an update request 202. The update request 202 will be received by the communication means (not shown) of the remote display module 201. The update request 202 is forwarded by the communication means to the processing means 203 of the remote display module 200. The processing means 203 then decides how to process the update request 202 in such a way that makes intelligent use of the energy resources available.

The intelligent energy management decisions performed by the remote display module are shown in 205 of Figure 2. A display update request 202 is received by the remote display module 200, and the processing means 203 determines the amount of energy required 204 to perform the update request 202. In a preferred embodiment, the update request 202 comprises an instruction to be executed by the processing means 203. The processing means 203 is then able to determine the required energy amount 204.

Preferably, the required energy amount 204 is determined from a lookup table of required energy amounts held in memory (not shown) on the remote display module 201. Alternatively, the display update request 202 may comprise an estimated required energy to execute the instruction of the display update request 202. In addition, the required energy amount 204 may be determined based on the amount of energy required during previous executions of the same instruction of the display update request 202.

The processing means 203 upon receiving the update request 202, queries the energy source (not shown) of the remote display device 201 in order to obtain an available energy amount 206. In a preferred embodiment, the available energy amount 206 is the amount of energy available to the processing means 108 for executing instructions. Preferably, the available energy amount 206 may not be the total amount of energy available to the energy source of the remote display module 201. This allows for the energy source to maintain a reserve supply of power to other components of the remote display device even while the processing means 203 executes an instruction of a display update request 202.

When the processing means 203 has determined the available energy amount 206 and the required energy amount 204, a threshold 208 is determined. The threshold 208 is based on the required energy amount 204 and indicates the minimum amount of energy required in order to execute the instruction of the display update request. In a preferred embodiment, the threshold 208 is equal to the required energy amount 204. Alternatively, the threshold may be a value greater than the required energy amount 204 in order to compensate for further energy requirements of the remote display module 201.

The threshold 208 is used by the processing means 203 to determine if there is sufficient energy available from the energy source of the remote display module 201 to execute the display update request 202. If the available energy amount 206 is less than the threshold 208, then the processing means determines that there is insufficient energy available to execute the display update request 202. As a result, a display update response 210 is generated by the processing means 203 and sent to the communication means of the remote display module 200 to be transmitted.

When the available energy amount 206 is less than the threshold 208, the display update response 210 comprises information indicative of the fact the remote display module 201 has not carried out the display update request. The display update response 208 may therefore comprise information that is based upon the display update request 202. The information comprising a display update response 210 may change for different types of update request 202

Beneficially, the intelligent energy management shown in 205 allows for the remote display module 201 to make efficient use of the energy resources available. That is, the remote display module 201 efficiently uses the energy available by not attempting to perform an action when there is insufficient energy to perform that action. This in turn can lead to a reduction in running costs and a reduction in downtime due to a remote display module running out of energy. This has the added benefit of ensuring that the functionality of the remote display module 201 will be consistent with user expectations.

Furthermore, the display update response 210 allows for the remote display module 201 to inform outside sources, such a central server, of its current energy situation. Beneficially, this allows the sender of the display update request 202 to be informed as to whether or not the display update request 202 has been carried out on the remote display module 201. This in turn, as described in detail below, allows the sender of the display update request 202 to intelligently manage future updates to the remote display module 201.

Therefore, an aspect of the invention is that the processing means 203 declines from executing an instruction of a display update request 202 when the available energy amount 206 is less than a threshold 208 based on the required energy amount 204. In addition, when the available energy amount 206 is greater than a threshold 208 based on the required energy amount 204, the processing means 203 executes an instruction of a display update request 202.

The display update request 202 may comprise a download instruction. A download instruction may inform the processing means 203 that a display update may be received over the communication medium. The display update may comprise text or an image to be displayed on the display of the remote display module 201.

When the display update request 202 comprises a download instruction, then the display update response 210 may comprise an estimated time to retry value when the available energy amount 206 is less than a threshold 208. The estimated time to retry value indicates the time it will take for the remote display module 201 to acquire enough energy to execute the download instruction. Beneficially, the estimated time to retry allows for outside sources to ascertain a time in the future by when the update request comprising the download instruction should be sent. This therefore enables the remote display module 201 to be managed in an intelligent way since the remote display module 201 provides a indication as to when a successful display update request may occur. As such, the future display update request can be sent at a point in time when it is most likely to be executed by the remote display module 201, thus providing a more efficient update system. The estimated time to retry in an embodiment is based on the difference between the threshold and the available energy amount 206 and an estimate of the rate of charging of the energy storage means. For example where the remote display module is charged via a solar panel, if the panel is being irradiated at a high rate the estimated time to retry would be short as the remote display module is generating and storing energy. Conversely where the irradiance is low the estimated time to retry would be longer. The estimated time to retry may be returned as an absolute time, a relative amount of time or merely as a number leaving the central server to calculate time.

The display update request 202 may comprise an update instruction. An update instruction may inform the processing means 203 that the display of the remote display module 201 should be updated with the information previously downloaded.

In embodiments where the display update request 202 comprises an update instruction, then the display update response 210 may comprise an estimated time to update value when the available energy amount 206 is less than a threshold 208. The estimated time to update value indicates the time it will take for the remote display module 201 to acquire enough energy to perform the display update. Beneficially, this indicates to an outside source that the remote display module 201 will execute the update instruction at a point in time once sufficient energy is available, thus enabling a more efficient update system.

In order to ascertain whether or not a previous display update request has been carried out, the state of the remote display module 201 may be queried. In this instance, the display update request 202 comprises a current state query instruction.

When the display update request 202 comprises a current state query instruction, the display update response 208 may comprise a current state value indicative of the current state of the remote display module 201 with respect to the update process. In a preferred embodiment, the current state value may be one of idle, download complete, insufficient energy for download, charging, and update complete. In alternative embodiments, other current state values may be used indicative of the state of the remote display module 201.

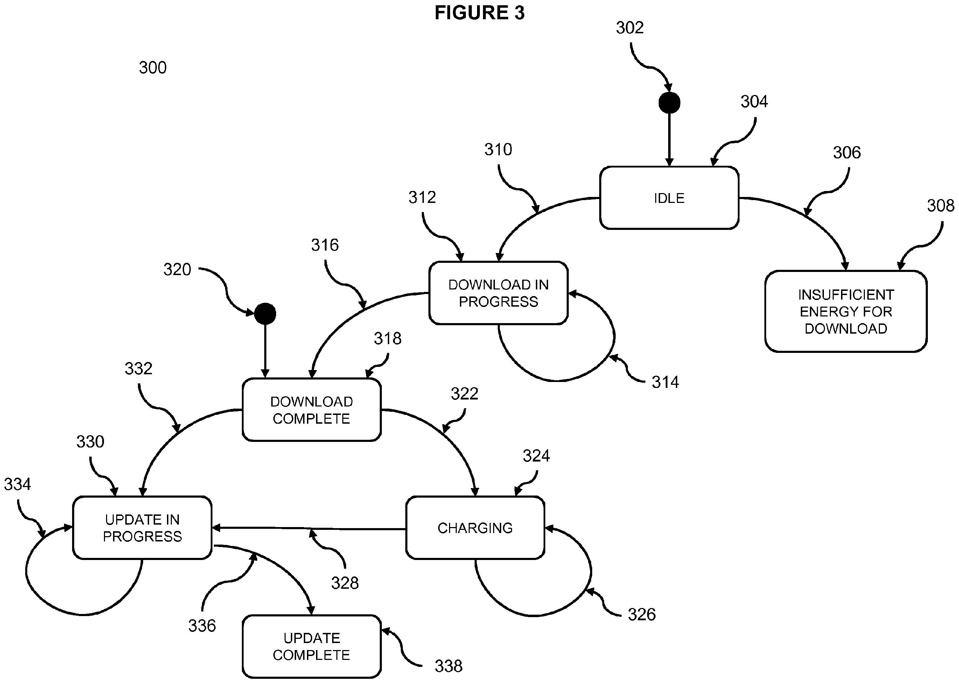

Figure 3 shows a state chart for a remote display module according to a preferred embodiment.

The state chart 300 is indicative of the possible states, and transitions between states, that a remote display module such as remote display module 100 may take according to a preferred embodiment. A display update request 302 comprising a download instruction is received when the remote display module is in an idle state 304. The idle state 304 may correspond to a lower power state whereby only key functionality such as powering the micro-controller is performed. The remote display module transitions 306 to the state 308, representing insufficient energy for download, when the available energy amount is less than a threshold based on the required energy amount.

Alternatively, the remote display module may transition 310 from an idle state 304 to a download in progress state 312 when it is determined that the available energy is greater than a threshold based on the required energy amount. The remote display module remains in the download in progress state 312 whilst there still remains data to be downloaded 314. When all data has been downloaded, the remote display module transitions 316 to the download complete state 318.

When the remote display module is in the download complete state 318, a display update request 320 comprising an update instruction may be received from an external source, for example a central server. If the available energy amount is less than a threshold based on the required energy amount, then the remote display module transitions 322 to the charging state 324. The remote display module remains in the charging state 324 whilst the available energy amount is less than a threshold based on the required energy amount 326. When in the charging state 324, the remote display module transitions 328 to the update in progress state 330 when the available energy amount is greater than a threshold based on the required energy amount.

The remote display module may alternatively transition 332 to the update in progress state 330 from the download complete state 318 when the available energy amount is greater than a threshold based on the required energy amount. The remote display module remains in the update in progress state 330 whilst the update is being performed 334. When the update has been performed, the remote display module transitions 336 to the update complete state 338.

Beneficially, the state of the remote display module may provide information related to the progress that the remote display module is making within the update process. This allows for decisions to be made as to the scheduling of future updates, and also allows for the user to be informed as to whether a specific remote display module has updated its display or not. Without the remote display module providing an indication of its progress through the display update response, the only way of ensuring that a display update request has been received and processed is to physically check the state of the remote display module. In an environment containing multiple remote display modules, such a physical check is impractical. The invention therefore alleviates this problem by providing feedback from each remote display module as to its ability to perform an update, and also its current state within the update progress. This allows for problems to be identified and remedied quickly and efficiently.

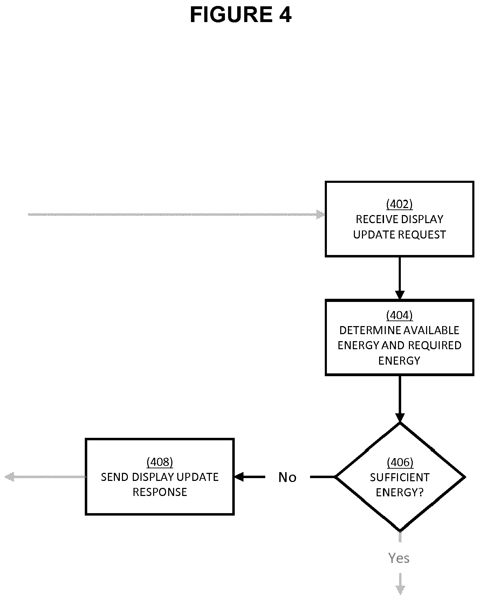

Figure 4 shows a flowchart of the steps taken by a remote display module when performing intelligent energy management.

At step 402, a display update request is received by the remote display module. In a preferred embodiment, the display update request comprises an instruction to be executed by the remote display module such as a download instruction, or an update instruction.

At step 404, the remote display module determines the available energy and the required energy. The available energy corresponds to the energy that is available from the remote display module's energy source to perform a display update request. The energy available to perform a display update request may not be the total energy available at the remote display module. The energy source of the remote display module may maintain an amount of energy for core functionality such as maintaining the display and powering the communication means.

Once the values are determined at step 404, the process continues to step 406, where a decision is made by the remote display module as to whether there is sufficient energy available to perform the instruction of the display update request. At step 406, the processing means of the remote display module compares the required energy amount, determined from the display update request, to a threshold based on the available energy amount.

If it is determined at step 406 that there is insufficient energy available to perform the display update request, then a display update response is sent at step 408.

The display update response sent at step 408 comprises information relating to the remote display module's ability to carry out the display update request. This therefore allows an external source to be informed as to whether or not the display update request that was sent has been received and executed. Beneficially, this provides for an efficient means of updating remote display modules as updates can be sent at a time when a remote display module is likely to have most available energy, and therefore most chance of performing the display update request.

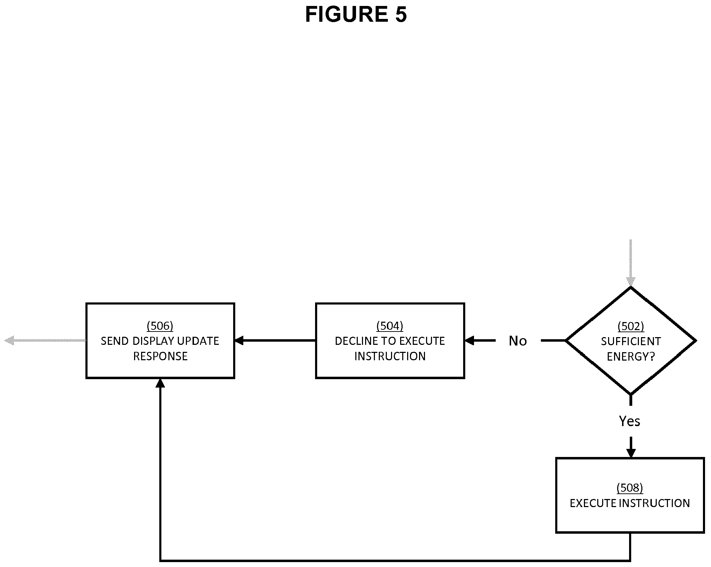

In addition, whether or not the remote display module carries out an instruction of a display update request is dependent upon the decision made at step 406. This is shown in Figure 5.

Figure 5 shows a flowchart of a portion of the steps taken by a remote display module as part of the update process.

At step 502, a decision is made by the processing means of the remote display module as to whether there is sufficient energy available to execute an instruction of a display update request. If the available energy amount is less than a threshold based on the required energy amount, then the processing means may proceed to step 504, where the processing means declines to execute the instruction of the display update request. In consequence, a display update response is generated based on the fact that the remote display module has declined to execute the instruction. The display update response is then sent at step 506.

Returning to step 502, if the available energy amount is greater than a threshold based on the required energy amount, then the processing means may decide to execute the instruction at step 508. The instruction of the display update response may be a download instruction, in which case at step 508 the processing means performs the download operation according to the instructions sent in the display update request. Alternatively, the instruction of the display update response may be an update instruction, in which case at step 508 the processing means performs the update operation according to the instructions sent in the display update request. Additionally, the instruction of the display update response may be a current state query instruction, in which case at step 508 the processing means determines the current state of the remote display module.

Once the instruction has been executed at step 508, a display update response is generated based upon the instruction. In a preferred embodiment, when the instruction comprises either a download instruction or an update instruction and the instruction has been executed, the display update response comprises an indication that the instruction has been executed. Additionally, or alternatively, the display update response may comprise further information such as the available energy amount after execution. When the instruction comprises a current state query instruction, the display update response comprises a current state value. In a preferred embodiment, the current state value may be one of idle, download complete, insufficient energy for download, charging, and update complete. In alternative embodiments, other current state values may be used and the display update response may comprise further information such as the available energy amount after execution.

In all of the preceding examples, reference is made to a remote display module alone for ease of clarity. However, an aspect of the invention is that a remote display module may be used within a system whereby multiple remote display devices are deployed and managed by a central server.

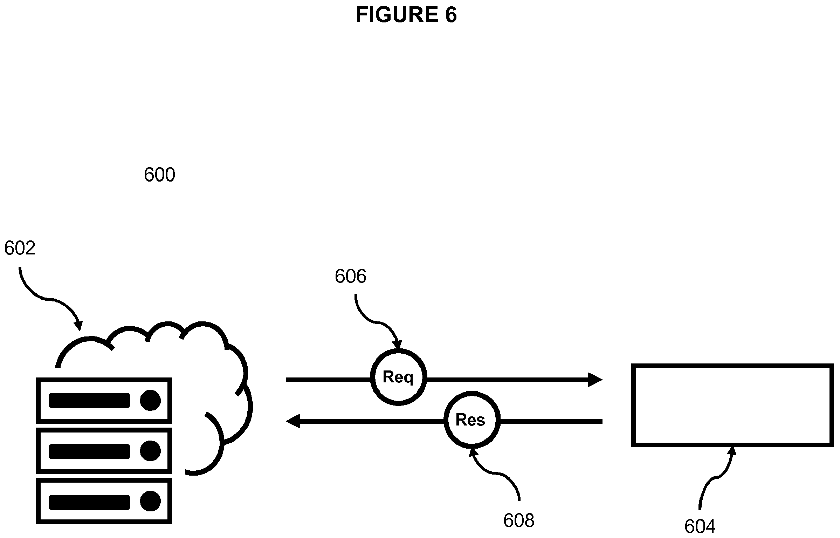

Figure 6 is a schematic representation of a remote display module system 600.

Figure 6 shows a system 600 including a first central server 602 and a first remote display module 604. In a preferred embodiment, a first central server 602 may centrally manage one or more remote display modules. Alternatively, a system may include a number of central servers that manage one or more remote display modules over a large area, or a central server monitoring servers distributed across many locations.

The first central server 602 is configured to send a display update request 606 to a remote display module 604 which in turn sends a display update response 608 to the first central server 602. The first central server comprises a communication means (not shown) enabled to send and receive data over a network such as a Wi-Fi network, radio frequency network, or cellular network. Preferably the central server 602 communicates at sub 1-GHz frequencies.

As noted in more detail above, the display update response 608 is indicative of the ability of the remote display module 604 to carry out the display update request 606. As such, the first central server 602 may use the contents of the display update response 608 in order to manage any future display update requests sent to the remote display module 604. In addition, a further benefit of providing such information in the display update response 608 is that a user of the system 600 may be informed of the progress of updates sent to remote display modules within the system.

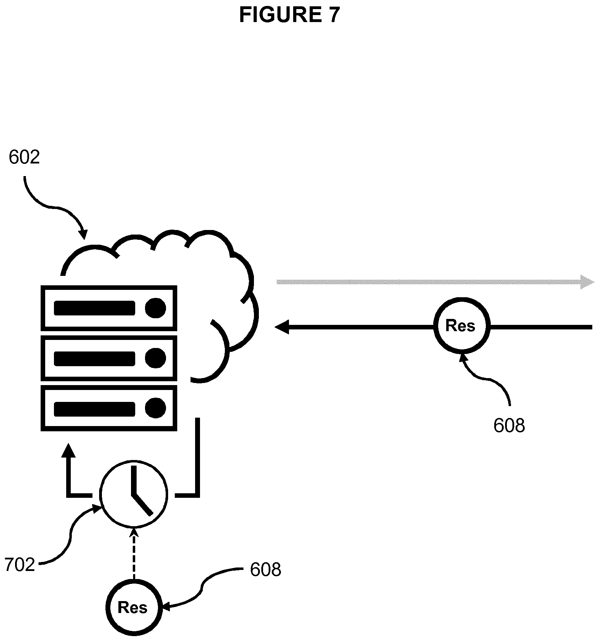

The first central server 602 may use the display update response 608 to schedule a future display update request for the remote display module 604. This is shown in Figure 7.

Figure 7 shows the first central server 602 scheduling 702 a future display update request for a remote display module based on the received display update response 608. That is, the first central server 602 is configured to use the information contained in the display update response 608 to automatically schedule a future display update request in order to increase the likelihood of the future display update request being carried out by the remote display module. This enables the scheduling system to provide display update requests in an efficient and timely manner. Furthermore, in contrast to the prior art where an update may be attempted at a set interval (e.g. every hour), regardless of the amount of energy available to the module, the amount of failed updates is reduced.

In a preferred embodiment, the remote display response 608 comprises information related to the amount of energy available to the remote display module. In addition, the remote display response 608 may contain information that provides an indication to the first central server as to when a future display update request should be sent.

In a preferred embodiment, when the display update request 606 sent to the remote display module 604 comprises a download instruction, the display update response 608 may comprise an estimated time to retry value. The estimated time to retry value is indicative of the amount of time required by the remote display module 604 to obtain sufficient energy to perform the download instruction of the display update request 606. The first central server 602 may use the estimated time to retry value as part of the scheduling 702 of a future display update request by requiring that the display update request 606 be sent at a point in time beyond the estimated time to retry value.

In a preferred embodiment, when the display update request 606 sent to the remote display module 604 comprises an update instruction, the display update response 608 may comprise an estimated time to update value. The estimated time to update value is indicative of the amount of time required by the remote display module 604 to both obtain sufficient energy to perform the update instruction of the display update request 606, and execute the update instruction. The first central server 602 may use the estimated time to update value as part of the scheduling 702 of a future display update request by requiring a future display update request comprising a current state query be sent at a point in time beyond the estimated time to update value. The first central server 602 may then use the response to the future update request comprising a current state query instruction to determine whether or not the display update request has been carried out.

As part of the scheduling process performed by the central server 602, each remote display device managed by the central server 602 may be assigned a priority in order to better schedule future updates.

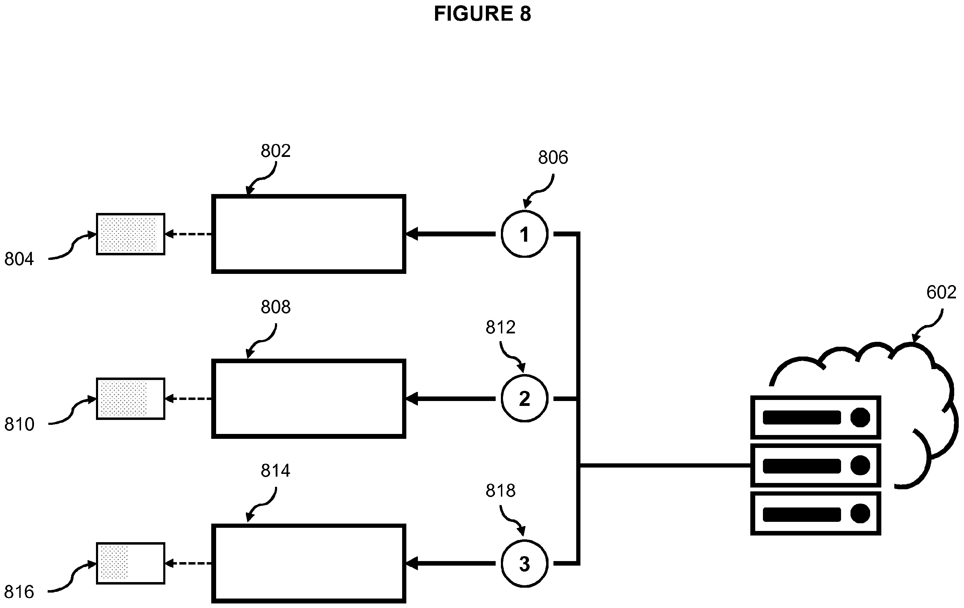

Figure 8 shows a priority ordering of remote display devices.

A central server 602 manages remote display devices 802, 808, and 814. Each remote display device has an available energy amount indicated by 804, 810, and 816 respectively. The central server 602 is able to assign a priority 806, 812, and 818 to each device to provide an order in which future display updates are sent.

In a preferred embodiment, a priority 806 of a remote display device 802 is based upon a display update request received from the remote display device 802. Alternatively, a priority 806 of a remote display device 802 is based directly upon an available energy amount 804 of the remote display device 802. The skilled person will appreciate that other priority values may be used in order to provide an efficient schedule of future display update requests.

Beneficially, the system provides for an efficient means of updating remote display devices wherein the remote display devices make intelligent use of their own energy and furthermore provide information to a central server as to the update process. This allows for an automated update process wherein future updates are scheduled for a point in time when they are most likely to be successfully performed by the remote display device.

The first central server 602 may be further configured to provide information to a user of the system related to the probability of achieving a successful update for a remote display module at a future point in time.

In a preferred embodiment, the probability of success value is based in part upon a display update response received from a remote display module. The probability of success value is a function of time such that at a time-point substantially close to the point in which the first central server estimates the remote display module will be sufficiently charged, the probability of success value approaches 1. The point in time in which the first central server estimates the remote display module will be sufficiently charged may be estimated from information contained within display update responses received from the remote display module.

In alternative embodiments, the probability of success value may be based upon display update responses received from other remote display modules within the system in order to account for energy usage by other modules.

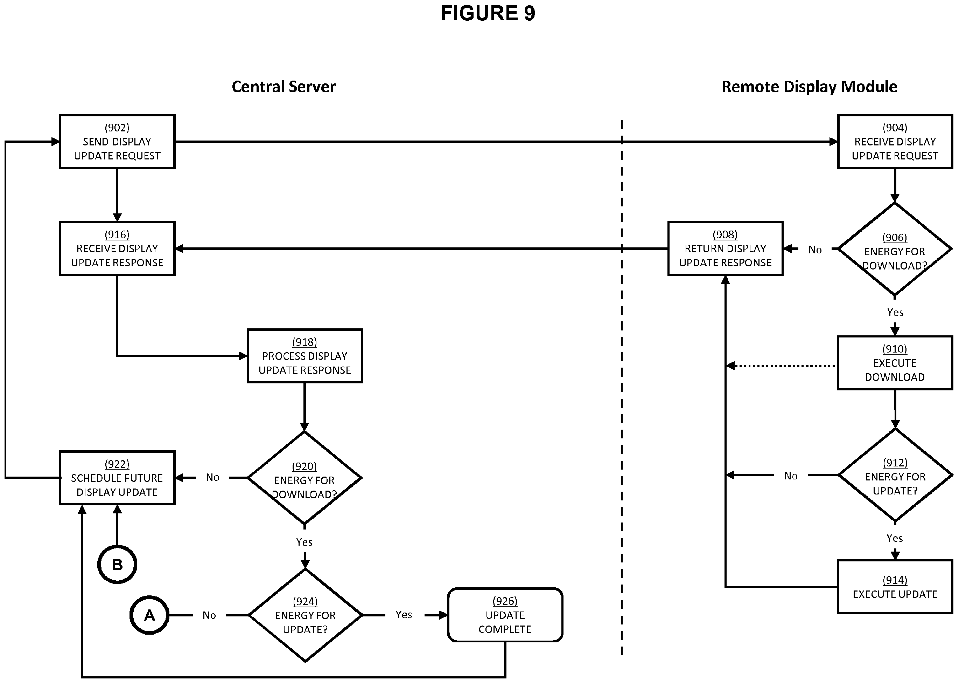

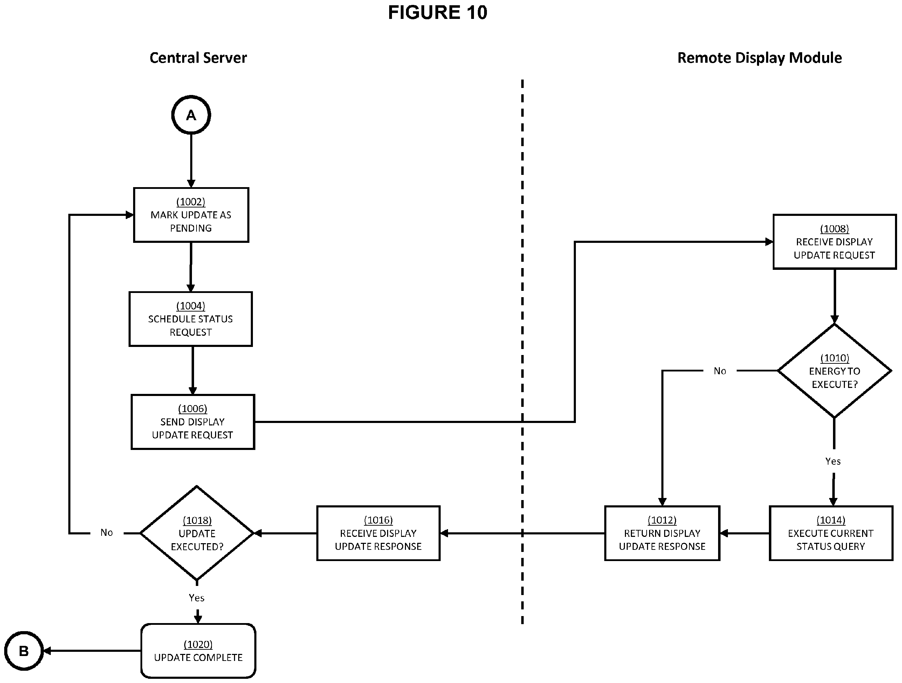

Figures 9 and 10 show a flowchart of a representative example of a preferred embodiment.

The flowcharts shown in Figure 9 and 10 detail the steps taken by a system, such as system 600 of Figure 6, when requesting and performing a display update involving a central server, such as central server 602, and a remote display module, such as remote display module 604.

At step 902, the central server sends a display update request to the remote display module. The display update request sent at step 902 includes a download instruction and an update instruction. In a preferred embodiment, the display update request is sent over a low frequency Wi-Fi or sub-1 GHz network. Alternatively, the display update request may be sent over a radio frequency, cellular, or wired network.

At step 904, the remote display module receives the display update request sent by the central server. The communications means, such as communications means 104, is configured to receive display update requests sent over a network. The communication means then forwards the display update request to the processing means, such as processing means 108.

At step 906, the processing means of the remote display module determines if there is sufficient energy available to execute the download instruction. The processing means may query the energy source, such as energy source 106, of the remote display module in order to determine the energy that is available to execute the download instruction.

The processing means further determines the energy required to execute the download instruction. Preferably, the processing means determines the required energy amount based on a lookup table of operations held in memory (not shown) on the remote display module. Optionally, the required energy amount may be determined based on the energy amount consumed when executing the same instruction previously. As such, the remote display module may use an average required energy amount.

The processing means then proceeds to calculate a threshold based on the required energy amount. Preferably, the threshold is equal to the available energy amount. Alternatively, the threshold may be set to a value above or below the available energy amount in order to retain energy for other functionalities of the remote display module.

Once the available energy amount and the threshold have been determined, the processing means compares the two values at step 906 in order to ascertain whether or not there is sufficient energy to execute the download instruction.

If the processing means determines at step 906 that the available energy amount is less than the threshold, then there is insufficient energy available to execute the download instruction. Accordingly, the process moves to step 908.

At step 908, the remote display module sends a display update response that is indicative of the remote display module's ability to perform the instruction of the display update request. Since the remote display module has been unable to execute the download instruction, the display update response comprises information indicating that the instruction has not been executed. Preferably, the display update response comprises a flag indicating that the instruction was not executed and preferably including information indicating when the update will be able to take place.

The display update response sent at step 908 includes an estimated time to retry value based on the amount of time required for the remote display module to obtain sufficient energy to perform the download instruction. The estimated time to retry value may be calculated based on the available energy amount, the required energy amount, and a rate at which the remote display module obtains energy. Preferably, the rate at which the remote display module obtains energy is computed from a look up table held in memory of the remote display module. Alternatively, the rate at which the remote display module obtains energy may be learnt over time by the remote display module and as such adapt according to changing energy needs.

Returning to step 906, if the available energy amount is greater than a threshold based on the required energy amount then the process continues to step 910.

At step 910, the download instruction is executed. In a preferred embodiment, the download instruction comprises the data required for the update. At step 910, the processing means of the remote display module instructs the communication means of the remote display module to download the update data.

Once the update data has been fully downloaded, the process continues to step 912 where the processing means of the remote display module determines if there is sufficient energy to execute the update. That is, it determines whether there is enough energy to change the display of the remote display module to include the information contained in the downloaded update data. In a preferred embodiment, the display update download data comprises an image, and the update instruction comprises changing the image shown on the display of the remote display module to the newly downloaded image. Alternatively, the display update download data may comprise a portion of an image, or text to be displayed on the display.

At step 912, the processing means compares the available energy amount, determined by querying the energy source of the remote display module, to a threshold based on the required energy amount. The means by which the required energy amount is calculated is described in more detail above. If the available energy amount is less than the threshold, then there is insufficient energy to perform the update and the process continues to step 908.

At step 908, when it has been determined that there is insufficient energy to execute the update instruction, a display update response is sent indicative of this fact. Preferably, the display update response comprises a flag indicating that the update instruction was not executed and information indicating when the update can take place.

Returning to step 912, if there is sufficient energy to execute the update instruction, then the process moves to step 914.

At step 914, the update instruction is executed. In a preferred embodiment, the execution of the update instruction corresponds to updating the display such that the image displayed is changed to the newly downloaded image. Alternatively, the update instruction may update a portion of the display, or specific text on the display, according to the data of the update download.

Once the display update has been executed, the process continues to step 908, where a display update response is sent comprising an indication that the download instruction and the display instruction were executed. Preferably, the display update response comprises flags indicating that the instructions were executed. Additionally, the display update response comprises a value indicative of the remote display module's available energy amount.

At step 916, the central server receives the display update response sent by the remote display module at step 908. The display update response comprises information indicative of the remote display module's ability to perform the display update request sent at step 902. Accordingly, the display update response may have been sent by the remote display module after either step 906, step 910, step 912, or step 914.

As such, at step 918 the central server processes the contents of the display update response in order to schedule a future course of action.

At step 920, the server determines whether the remote display module has been able to execute the download instruction. In a preferred embodiment, the central server checks the display update response for a flag indicating whether or not the remote display module attempted the download instruction and information indicating when the update can take place.

If the download instruction was not executed, the process continues to step 922 where a future display update request is scheduled. In a preferred embodiment, a future display update request is scheduled for a remote display module based on the received display update response. Since the central server has determined that the download instruction was not executed, the estimated time to retry value of the display update response is examined and used to determine when the display update request be re-sent.

Alternatively, the central server may assign the remote display module a priority and place the remote display module in a priority queue which determines the order in which display update requests are sent. In a preferred embodiment, the priority is calculated according to the available energy amount of the remote display module. Alternatively, the priority may be calculated based on aspects such as response time, or importance of update.

Returning to step 920, if the central server determines that the remote display module was able to execute the download instruction, the process continues to step 924.

At step 924, the central server determines whether or not the remote display module was able to perform the update. Preferably, the display update response comprises a flag that the central server checks indicating whether or not the remote display module attempted the update instruction.

If the central server determines that the remote display module was able to execute the update instruction, then the process continues to step 926 where the display update is marked as complete. Optionally, the central server may also schedule a future display update request for the remote display module.

If at step 924 the central server determines that the remote display module did not attempt to execute the update instruction, then the process continues to step 1002 of Figure 10.

At step 1002, the central server marks the update as pending for the remote display module. Preferably, the central server maintains a list of updates sent to each remote display module along with the status of the update. The status of the update may include sent, pending, or complete.

At step 1004, the central server schedules a display update request for the remote display module at a future point in time. In a preferred embodiment, the central server determines the time at which a future display update request should be sent based on the received display update response. The display update response preferably comprises an estimated time to update value indicative of when the remote display module should have completed the display update. Accordingly, the central server schedules the future display update request at a point in time beyond the estimated time to update value.

Alternatively, the central server may schedule the future display update request at a point in time significantly beyond a pre-determined maximum time to update held in memory on the central server.

At step 1006, a display update request is sent at a point in time beyond the time determined at step 1004. The display update request sent at step 1006 comprises a current status query request.

At step 1008, the remote display module receives the display update request and at step 1010 the remote display module determines if there is sufficient energy to execute the current status query request. If the available energy amount at the remote display module is less than a threshold based on the required energy amount, then the process continues to step 1012 where a display update response is sent.

At step 1010, if the remote display module determines that the available energy amount is greater than a threshold based on the required energy amount, then the process continues to step 1014.

At step 1014, the remote display module executes the current status query. In a preferred embodiment, the current status query is executed by analysing at what point in the update process the remote display module is in. Alternatively, the remote display module may fetch the current status value from a location in memory.

At step 1012, the display update response is sent. Preferably, the display update response comprises a flag indicating whether or not the remote display module has executed the current status query instruction. When the current status query has been executed, the display update response comprises the current status value.

At step 1016, the central server receives the display update response sent at step 1012 and at step 1018, the central server determines whether or not the update instruction has been executed.

In a preferred embodiment, the central server uses the current status value of the display update response in order to determine whether or not the update instruction of the display update request sent at step 902 has been executed. The central server may use the presence or absence of a current status value within the display update response to determine whether the display update request has been executed. Alternatively, the central server may use a flag of the display update response in order to determine whether the update instruction of the display update request sent at step 902 has been executed.

If the update instruction has not been executed, then the process returns to step 1002 and a future display update request is scheduled.

If the update instruction has been executed, then the process moves to step 1020, where the display status update is marked as complete. The process then moves to step 922 of Figure 9 where a future display update request is scheduled for the remote display module.

As such the present invention provides a more effective mechanism for managing displays by ensuring that the instructions are only executed when the remote display module is capable of completing the instructions. As failure to complete an update can lead to unexpected behaviour the process ensures that the devices behave in the expected manner. Furthermore, by intelligently managing energy usage the lifetime of the remote display modules may be extended and result in lower energy consumption as fewer failed updates occur.

## Claims

1. A remote display module, comprising:
a display;
a communication means, configured to transmit and receive data;
an energy module, configured to acquire energy from the environment, supply energy to the device, and store excess energy; and
a processing means, communicably linked to the display, the communication means, and the energy module;
wherein the processing means is configured to:
receive a display update request comprising an instruction;
determine an available energy amount from the energy module;
determine a required energy amount based on the energy required to execute the instruction of the display update request; and
send a display update response when the available energy amount does not exceed a threshold based on the required energy amount.

2. The remote display module of claim 1, wherein the processing means is further configured to decline from executing the instruction of the display update request when the available energy amount does not exceed a threshold based on the required energy amount.

3. The remote display module of any preceding claim, wherein the instruction of the display update request comprises a download instruction.

4. The remote display module of claim 3, wherein the display update response comprises an estimated time to retry value.

5. The remote display module of any preceding claim, wherein the instruction of the display update request comprises an update instruction.

6. The remote display module of claim 5, wherein the display update response comprises an estimated time to update value.

7. The remote display module of any preceding claim, wherein the instruction of the display update request comprises a current state query instruction.

8. The remote display module of claim 7, wherein the display update response comprises a current state value indicative of the state of the remote display module within the update process.

9. The remote display module of claim 8, wherein the current state value comprises one of idle, download complete, insufficient energy for download, charging, and update complete.

10. The remote display module of any preceding claim, wherein the processing means is further configured to execute the instruction of the display update request when the available energy amount exceeds a threshold based on the required energy amount.

11. The remote display module of claim 10, wherein the processing means is further configured to send a display update response after the instruction of the display update request has been executed.

12. The remote display module of any preceding claim, wherein the display update response comprises the available energy amount of the remote display module.

13. The remote display module of any preceding claim, wherein the threshold is equal to the required energy amount.

14. A method for controlling a remote display module, comprising the steps of:
receiving a display update request comprising an instruction;
determining an available energy amount from an energy module of the remote display module;
determining a required energy amount for executing the instruction of the display update request;
sending a display update response when the available energy amount does not exceed a threshold based on the required energy amount.

15. A system for managing updates within a limited energy supply environment, comprising:
a first central server; and
a first remote display module;
wherein the system is configured to:
send a first display update request comprising an instruction from the first central server to the first remote display module;
receive the first display update request at the first remote display module;
determine at the first remote display module an available energy amount and a required energy amount for executing the instruction of the first display update request;
send from the first remote display module to the first central server a first display update response when the available energy amount does not exceed a threshold based on the required energy amount.
